(19) **Europäisches Patentamt**
**European Patent Office**
**Office européen des brevets**

(11) Publication number: **0 247 527 B1**

## EUROPEAN PATENT SPECIFICATION

(45) Date of publication of patent specification: **09.10.91**  (51) Int. Cl.⁵: **A01G  31/02**

(21) Application number: **87107422.5**

(22) Date of filing: **21.05.87**

(54) Hydroponic culture system.

(30) Priority: **21.05.86 JP 114742/86**
 **30.10.86 JP 257014/86**
 **21.11.86 JP 276720/86**

(43) Date of publication of application:
 **02.12.87 Bulletin  87/49**

(45) Publication of the grant of the patent:
 **09.10.91 Bulletin  91/41**

(84) Designated Contracting States:
 **AT BE CH DE ES FR GB GR IT LI LU NL SE**

(56) References cited:
 **FR-A- 2 561 862**
 **GB-A- 1 443 226**

(73) Proprietor: **Q.P. Corporation**
 **4-13, Shibuya 1-chome Shibuya-ku**
 **Tokyo(JP)**

(72) Inventor: **Shizuka, Akagi**
 **3870-140, Oaza-Daimachi Sekiyado-cho**
 **Higashikatsushika-gun Chiba(JP)**

(74) Representative: **Strehl, Schübel-Hopf, Groening**
 **Maximilianstrasse 54 Postfach 22 14 55**
 **W-8000 München 22(DE)**

## Description

Background of the Invention

This invention relates to a hydroponic culture system which provides systematic, economical, and efficient hydroponic culture for almost uniform plants.

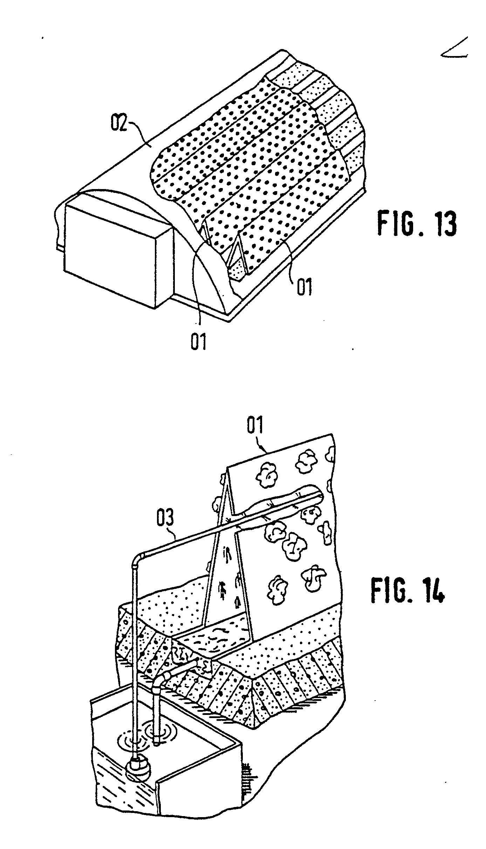

A prior art hydroponic culture system, which includes the features set forth in the first part of claims 1, 3 and 6, has been disclosed in GB-A-1 443 326. In this system, as shown in Fig. 13, plants are supported on a roof-shaped panel structure 01 having a number of holes, supplied with sunshine through a transparent arch roof 02, and with a hydroponic solution sprayed onto the roots of the plants from a hydroponic solution spraying mechanism 03 as shown in Fig. 14, to cultivate the plants. The hydroponic solution spraying mechanism 03 is fixed inside the panel structure 01 and is provided with a number of spray nozzles disposed along the longitudinal direction of the panel structure 01 to spray the hydroponic solution onto the roots of the plants.

However, such a prior art fixed-type hydroponic solution spraying mechanism 03 has been defective in that it is very large in total length and requires a large number of spray nozzles, resulting in a large-size, complex system, and the spray amount is uneven, which results in uneven and insufficient growth of the plants.

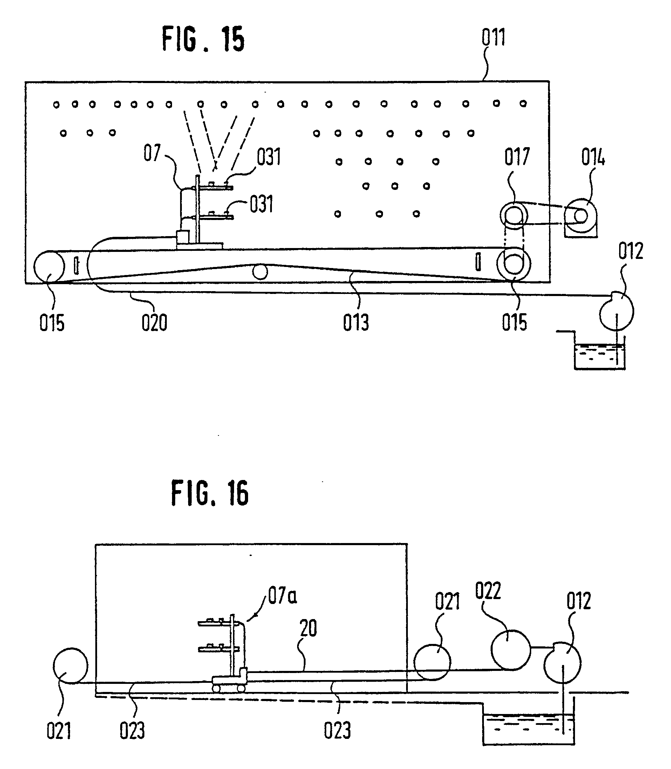

For a hydroponic culture system which eliminates such problems, the applicant has already developed a system as disclosed in JP-A-61-282 025. Referring to Fig.15, the hydroponic culture system shown in the application has a hydroponic solution spraying mechanism 07 and a hydroponic solution pumping mechanism consisting of a flexible hose 020 and a hydroponic solution pump 012. In this case, the hydroponic solution spraying mechanism 07, which is provided with four spray nozzles 031, is located inside a roof-shaped panel structure 011 and movable in the longitudinal direction thereof. There is provided an endless drive chain 013 along the longitudinal direction of the angle panel. The endless drive chain 013 is wound at its ends around rolls 015 which are driven to rotate by a motor 014 through a roll 017. The hydroponic solution spraying mechanism 07 is mounted on the endless drive chain 013 which is driven by the motor 014 to move the hydroponic solution spraying mechanism 07 along the longitudinal direction of the panel structure 011. The hydroponic solution spraying mechanism 07 is connected to the hydroponic solution pump 012 through the flexible hose 020 and, as shown in Fig. 16, a hose winding unit 022 is provided to prevent the flexible hose 020 from being slack. Referring to Fig.16, a hydroponic solution spraying mechanism 07a is reciprocally moved by reversibly winding a rope 023 of which front and rear ends are fixed to rope winding units 021.

The hydroponic culture system with such an arrangement has effectively obviated the above-described prior art defects, however, it has had the following problems that have yet to be eliminated.

(1) Winding the flexible hose 020 requires a separate place to store the hose and a complex operation for winding and unwinding of the flexible hose 020.

(2) A drive unit for driving the endless drive chain 013 or the rope 023, such as the motor 14, the roll 017 or the winding unit 021, is required, which results in a large-size system.

(3) It is difficult to adjust the tension of the endless drive chain 013, and a mechanical malfunction such as disengagement of the chain is liable to occur.

Summary of the Invention

With a view to obviate all of the prior art defects of hydroponic culture systems, it is a primary object of the present invention to provide a hydroponic culture system, which can uniformly spray the roots of plants supported by angle panels with the hydroponic solution or the like and easily move the hydroponic solution spraying mechanism by a compact means, thereby enabling systematic and uniform cultivation of the plants with improved economy.

This object is met by the invention characterised in claim 1. The same object is also met by the hydroponic culture systems according to claims 3 and 6.

Brief Description of the Drawings

Fig.1, Fig.2 and Fig.3 are schematic views showing a first embodiment of the hydroponic culture system according to the present invention.

Fig.4 and Fig.5 are a front view and a side view, respectively, of a hydroponic solution spraying mechanism of the first embodiment according to the present invention.

Fig.6 and Fig.7 are a front view and a side view, respectively, of a position detecting means of the first embodiment according to the present invention.

Fig.8 and Fig.9 are schematic views showing a test example in the first embodiment according to the present invention.

Fig.10 through Fig.12 are schematic views showing an environment control means for a plant cultivation room of a second embodiment according to the present invention.

Fig.13 and Fig.14 are schematic views showing prior art hydroponic culture systems.

Fig.15 and Fig.16 are front views showing a hydroponic solution spraying mechanism of a hydroponic culture system according to the previous application.

Detailed Description of the Invention

Preferred embodiments of the present invention when applied to a hydroponic culture system will be described with reference to the drawings.

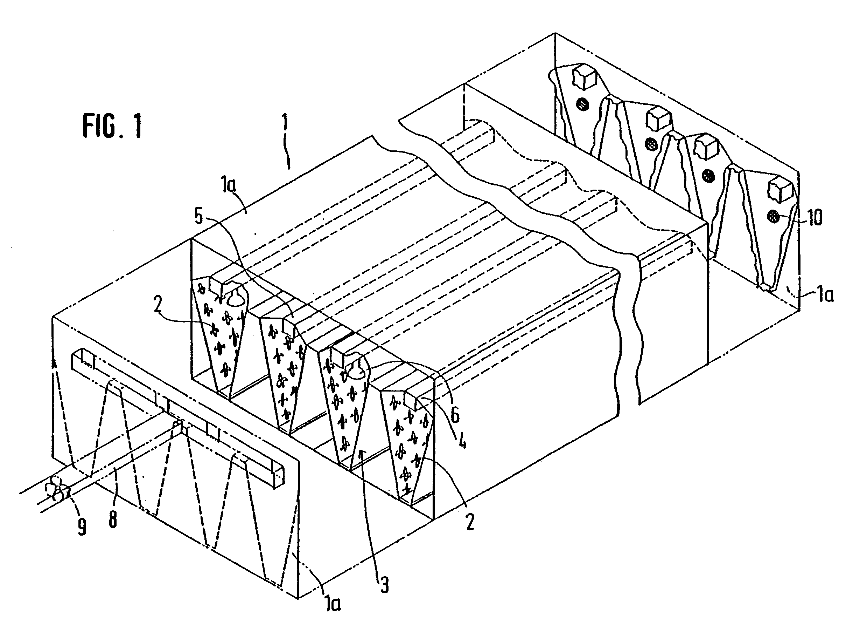

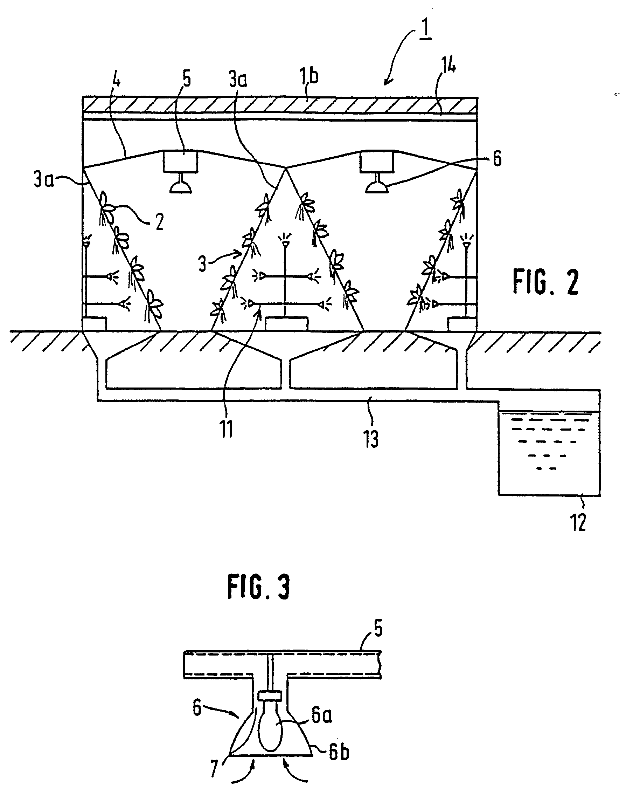

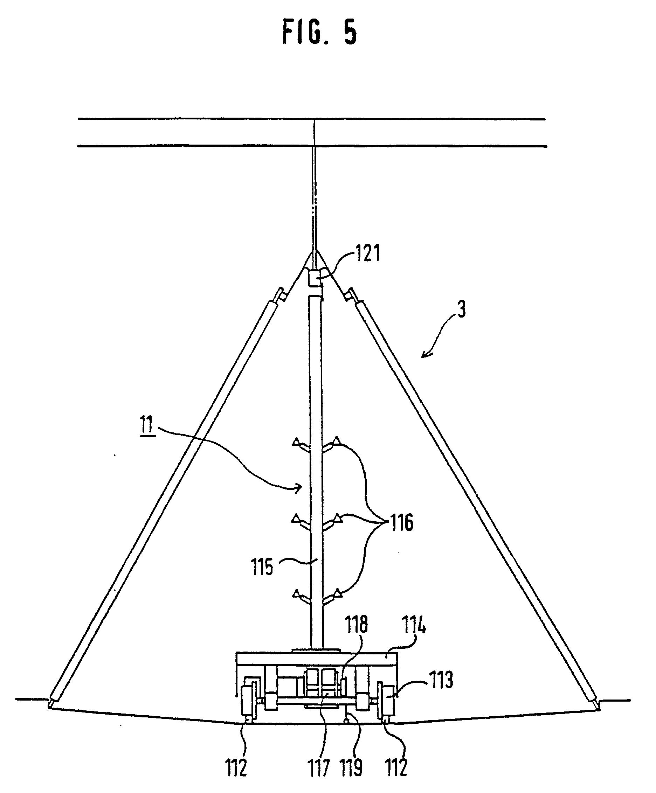

A first embodiment of the present invention will now be described with reference to Fig.1 through Fig.9. Fig.1 and Fig.2 are schematic views showing the first embodiment of the hydroponic culture system according to the present invention. Referring to the figures, there are provided roof-shaped panel structures 3 disposed in a plurality of rows in a plant cultivation room 1. Each of these roof-shaped panel structures, which in the following are referred to as "angle panels", consists of two panels 3a with top edges joined, having a number of holes to support plants with roots projected inside the angle panels, and both ends of the rows of the angle panels are connected to side walls 1a. Top edges of the adjacent angle panels 3 are connected with canopies 4 having an angular cross-section to prevent diffusion of light to the upper side, forming nearly triangular-sectioned spaces surrounded by the adjacent angle panels 3 and the canopies 4. The exhaust ducts 5 as an exhaust means are provided at the center of the canopies 4, and lighting apparatus 6 are disposed under the exhaust ducts 5, which are arranged with nearly equal spacings along the longitudinal direction of the angle panels 3.

The angle panels 3 can be made of foamed polystyrene, stainless steel, reinforced plastics, or ceramics, and have an inclination angle of 40 to 70 degrees, preferably 60 degrees, from the horizontal plane in view of the cultivation and lighting efficiencies. The canopies 4 can also have another cross-section, other than the angular cross-section, such as an arc cross-section that may provide concentration of heat to a limited position under the canopies and improved exhaust efficiency, and preferably be made of a heat-insulating material such as foamed polystyrene, or the heat-insulated material bonded with a reflecting material such as stainless steel plate or aluminum foil.

As shown in Fig.3, the lighting apparatus 6 consists of a lamp 6a such as a sodium lamp or mercury lamp and a cover 6b, and an exhaust port 7 communicating with the exhaust duct 5 is formed between the lamp 6a and the cover 6b. The cover 6b is to prevent diffusion of the radiation heat of the lamp 6a, and can be made of a transparent material. The exhaust duct 5 communicates with a duct 8 outside the plant cultivation room 1, and heat in the cultivation space is exhausted by a ventilation fan 9 disposed in the duct 8. The side wall 1a of the plant cultivation room 1 is provided with an air supply port 10. The air supply port 10 is to introduce the outside air, and can also be connected to an air-conditioning unit to supply cold air to the cultivation space or carbon dioxide when such is in short supply. The duct 8 and the air supply port 10 can also be connected to the same air-conditioning unit to recirculate the air. In this case, it is sufficient to replenish the amount of carbon dioxide absorbed by the plant 2, thus providing improved economy. Although it is preferable that the side wall 1a is provided with the air supply port 10, both ends of the rows of the angle panels 3 can be opened instead.

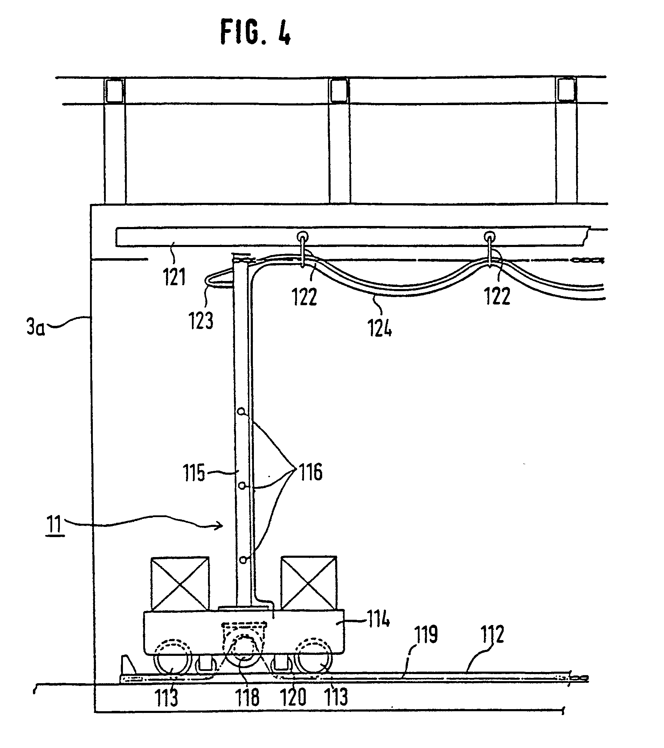

A hydroponic solution feeding mechanism of this embodiment will be described with reference to Fig.4 through Fig.7. Referring to the figures, rails 112 are disposed on the floor inside the angle panels 3, along the longitudinal direction of the angle panels 3, and a hydroponic solution spraying mechanism 11 with a self-propelling means is disposed on the rails 112. The hydroponic solution spraying mechanism 11 consists of a base plate 114 with wheels 113 placed on the rails 112, a stand 115 provided on the base plate 114, and spray nozzles 116 attached on both sides to the stand 115. The base plate 114 also has a variable-speed, reversible drive motor 117. A sprocket 118 is mounted on the rotary shaft of the drive motor 117, and the upper surface of the sprocket 118 is in engagement with a chain 119 which is disposed along the longitudinal direction of the angle panels 3, thus providing the self-propelling means. The chain 119, with both ends fixed, can be lifted up only at the part engaging with the sprocket 118. Auxiliary sprockets 120 are disposed at the front and rear sides of the sprocket 118 to prevent excessive lifting of the chain 119.

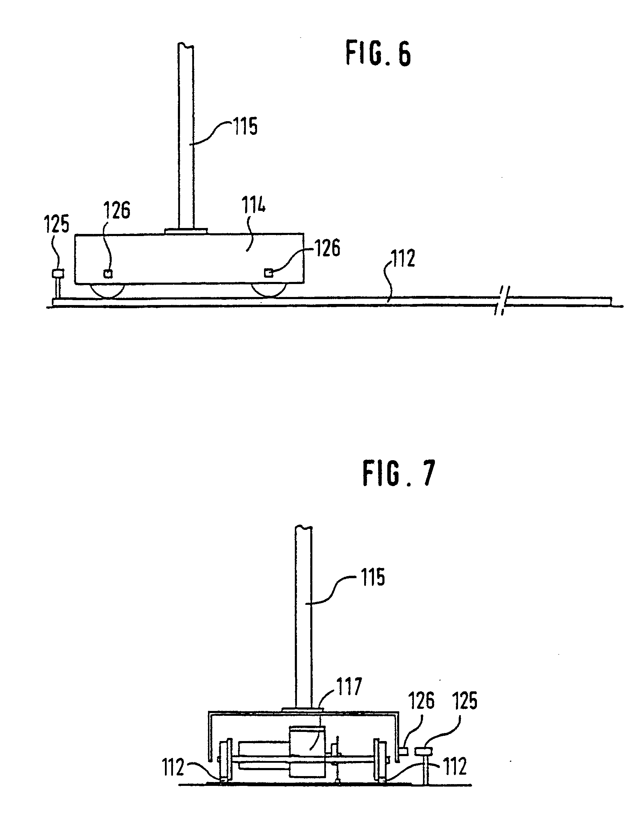

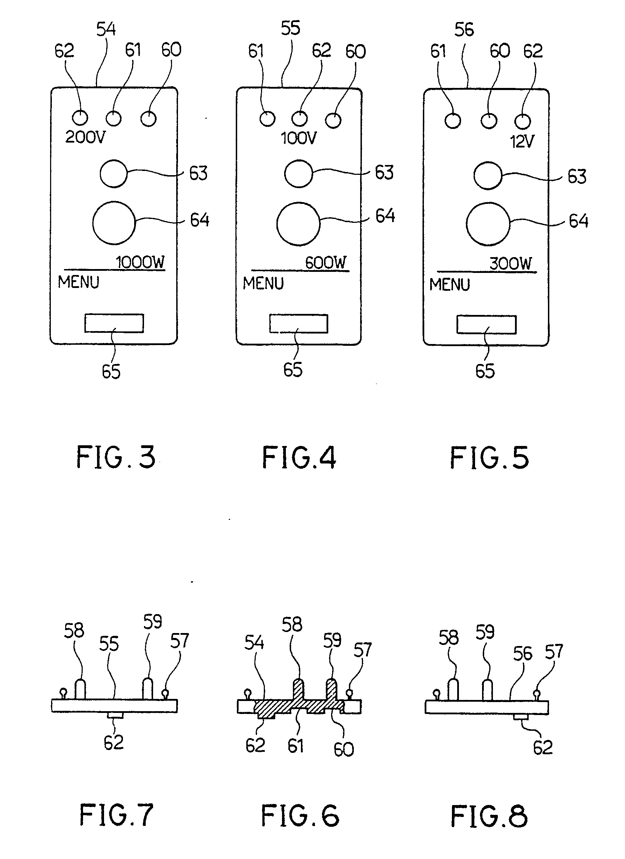

A hanger rail 121 is provided at the top of the angle panels 3, along the longitudinal direction of the angle panels 3. The hanger rail 121 has, hung thereon, a flexible hose 123 and a power cord 124, through hanger rolls 122. One end of the flexible hose 123 is connected to spray nozzles 116 through the stand 115, and the power cord 124 is connected to the drive motor 117. There are provided a plurality of hanger rolls 122 with adequate spacings, which guide the flexible hose 123 and the power cord 124 along the hanger rail 121 according to the movement of the hydroponic solution spraying mechanism 11. The other end of the flexible hose 123 is connected to a hydroponic solution feeding pump, which is not shown, so that the hydroponic solution is fed to the spray nozzles 116 through the hose 123. Thus, the flexible hose 123 and the pump form a hydroponic solution pumping mechanism. The other end of the power cord 124 is connected to a power supply, which is not shown, and the movement of the hydroponic solution spraying mechanism 11 is controlled by signals from position detecting means provided at both ends of the rail 112. Thus, as shown in Fig.6 and Fig.7, there are provided proximity switches 125 which sense metals at both ends of the rails 112, and a proximity switch striker 126 made of a metal at the side of the base plate 114. When the hydroponic solution spraying mechanism 11 is detected at one end of the rails 112 by one of the proximity switches 125, the phase of the alternating current supplied to the drive motor 117 is switched to reverse the rotation of the drive motor 117, thereby reciprocally moving the hydroponic solution spraying mechanism 11. The proximity switches 125 used in this embodiment are resistant to water and therefore preferably for use as the position detecting means which, however, is in no way limited to such proximity switches; other types may be used such as limit switches or photoelectric tubes.

The hydroponic solution sprayed and accumulated on the floor is collected through a collection passage 13. The inner surface of a ceiling 1b of the plant cultivation room 1 is provided with a heat-insulating material 14.

In this arrangement of the hydroponic culture system, the surface of the angle panels 3 can also be provided with a reflective surface in addition to the lower surface of the canopy 4 for further improved lighting efficiency.

The hydroponic culture system of this embodiment is used as follows.

Young plants 2 are inserted into a number of holes provided in the angles panels 3. Preferred plant types to be cultivated include green vegetables such as lettuce, Brassica Rapa var. pervidis, chrysanthemum coronarium, and spinach. The plants are irradiated with light from the lighting apparatus 6, and supplied with the hydroponic solution by the hydroponic solution feeding mechanism. This causes the young plants 2 to grow while absorbing carbon dioxide and oxygen in the plant cultivation room 1. In this embodiment, there is provided an environment control means for controlling the temperature, humidity and carbon dioxide concentration in the plant cultivation room 1, thereby replenishing shortage of carbon dioxide. In this case, the carbon dioxide can be supplied during the lighting period in which the artificial light is applied to activate the photosynthesis.

A preferred example of the environment control means will be described later in detail in another embodiment of the present invention.

The operation of the hydroponic solution spraying mechanism 11 is described.

The drive motor 117 is energized to rotate the sprocket 118, which engages with the chain 119 to move the base plate 114 along the rails 112. When the base plate 114 reaches one end of the rails 112 and is detected by the proximity sensor 125, the drive motor 117 is rotated in reverse to move the base plate 114 reciprocally. At the same time, the hydroponic solution is sprayed from the spray nozzles 116 evenly over the roots of the plants. The flexible hose 123 and the power cord 124 are automatically expanded and contracted according to the movement of the base plate 114 by the function of the hanger roll 122, thus preventing obstruction to the reciprocal movement of the base plate 114.

The self-propelling means in the first embodiment consists of the drive motor 117, the sprocket 118, and the chain 119. Since the chain 119 is disposed only one on the floor, there is no difficulty in adjusting the tension of the chain 119, and since there are also provided the auxiliary sprockets 150, the chain 119 and the sprocket 118 will not disengage. The self-propelling means is in no way limited to the type as described above; any types may be used that positively move the hydroponic solution spraying mechanism in reciprocal movement.

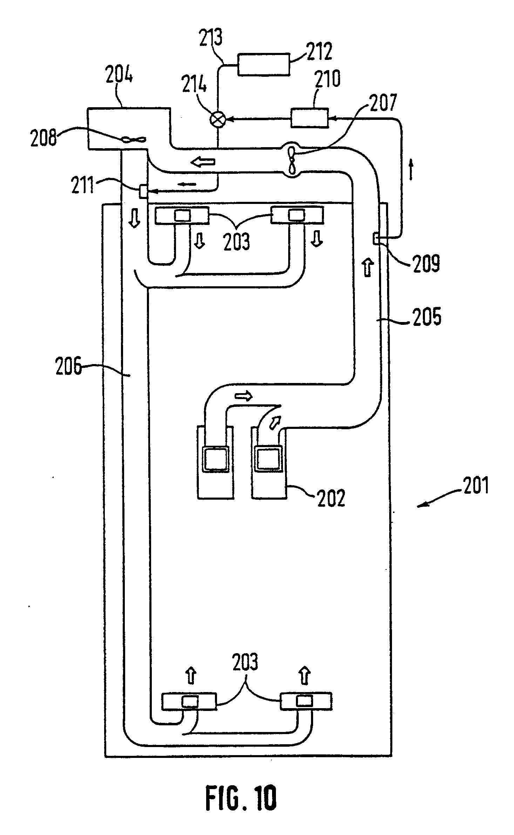

A closed-type lighting and an open-type lighting in the first embodiment are compared. The closed-type lighting indicates one which uses the hydroponic culture system having the canopies in this embodiment. Test systems used are shown in Fig.8 and Fig.9, of which the components are indicated with the same numerals as used in the above-described embodiment with the description omitted. The lower surfaces of the canopy 4 in Fig.8 and the ceiling in Fig.9 are provided with reflective surfaces. A 940W reflector-type high-pressure sodium lamp with a total light flux of 110,000 lumina is used for the lighting apparatus 6.

The cultivation conditions include a daytime of 18 hours, a day temperature of 24 degrees C, a night temperature of 18 degrees C, and a carbon dioxide concentration of 1,500 ppm. Young plants of lettuce of 20 days after seeding (with 4 to 5 leaves, about 10 g weight) are planted at positions A to K, and the weights of the individual plants are compared after a cultivation period of 10 days. The result is shown in the Table below.

| Position | | A | B | C | D | E | F | G | H | I | J | K | Av. |
|---|---|---|---|---|---|---|---|---|---|---|---|---|---|
| Closed lighting | Illuminance (x 10,000 lux) | 1.8 | 2.0 | 2.1 | 2.3 | 2.4 | 2.6 | 2.6 | 2.5 | 2.3 | 2.1 | 1.9 | 2.2 |
| | Plant weight (g) | 83 | 89 | 93 | 86 | 117 | 93 | 117 | 122 | 100 | 88 | 81 | 97 |
| Open lighting | Illuminance (x 10,000 lux) | 1.4 | 1.6 | 1.7 | 2.0 | 2.3 | 2.6 | 2.5 | 2.4 | 2.2 | 2.0 | 1.7 | 2.0 |
| | Plant weight (g) | 36 | 62 | 78 | 84 | 88 | 110 | 114 | 108 | 90 | 84 | 74 | 84 |

As shown in the Table, the closed-type lighting provides a higher illuminance on the panel surface than the open-type lighting, and a higher growth rate, resulting in a greater plant weight.

The canopies 4 with exhaust ports 7, as used in the first embodiment, form narrow triangular-sectioned spaces, which provide improved lighting efficiency and reduced load to the air-conditioning unit resulting in considerably reduced power cost, thereby systematically and efficiently producing almost uniform-size plants with improve economy.

By disposing the exhaust ports 7 in the vicinity of the light source 6a, as used in this embodiment, the accumulated heat can be eliminated before the radiation heat diffuses, thereby further reducing the load to the air-conditioning unit.

A second embodiment according to the present invention will be described with reference to Fig.10 through Fig.12. In this embodiment, a preferred environment control means for the hydroponic culture system is described.

Fig.10 is a schematic view of an environment control means for this embodiment of the plant cultivation room. Referring to Fig.10, a plant cultivation room 201 has an exhaust port 202 and an air supply port 203, which are connected to an air-conditioning unit 204 disposed outside through an exhaust duct 205 and an air supply duct 206, respectively. With such an arrangement, air in the plant cultivation room 201 is fed by a suction fan 207 disposed in the exhaust duct 205, through the exhaust duct 205 to the air-conditioning unit 204, where the air is conditioned (cooled or heated). The conditioned air is returned by a blowing fan 208 through the air supply duct 206 to the plant cultivation room 201. In this embodiment, there is provided a carbon dioxide sensor 209 as a carbon dioxide concentration measuring device in the exhaust duct 205, which takes in a sample to be measured for the concentration of carbon dioxideand outputs an electrical signal according to the measured carbon dioxide concentration of the sample to a carbon dioxide controller 210 as a control means. A carbon dioxide outlet port 211 is provided in the vicinity of the connection of the air supply duct 206 to the air-conditioning unit 204. The carbon dioxide outlet port 211 is connected to a carbon dioxide cylinder 212 as a carbon dioxide supply source through a feed pipe 213 as a feed passage, and an electromagnetic valve 214 is disposed in the middle of the feed pipe 213. The carbon dioxide controller 210 has a function as a control means to control the electromagnetic valve 214 according to the electrical signal transmitted from the carbon dioxide sensor 209. Thus, the carbon dioxide controller 210 compares the value of the electrical signal transmitted from the carbon dioxide sensor 209 and an electrical signal value corresponding to a predetermined carbon dioxide concentration and opens the electromagnetic valve 214 for a predetermined period of time according to the difference between the above signals to feed a predetermined amount of carbon dioxide into the air supply duct 206. Amounts of carbon dioxide to be fed relative to the difference in the electrical signals between the measured value and the setting value are previously determined through a test operation and set to the carbon dioxide controller 210.

Since, in this embodiment, air is exhausted from the plant cultivation room 201 through the exhaust port 202 and fed through the air supply port 203, it is circulated at a substantial speed in the plant cultivation room. In this embodiment, the exhaust port 202 is disposed on the ceiling at the center of the plant cultivation room 201 and the air supply ports 203 are disposed at both sides of the plant cultivation room 201, thereby providing a high recirculation efficiency. By sampling air in the exhaust duct 205 for measuring the carbon dioxide concentration in the plant cultivation room 201, a measured value which reflects the entire plant cultivation room 201 can be obtained. This assures a proper supply of carbon dioxide according to the measured concentration of carbon dioxide. Since the carbon dioxide is not directly supplied into the plant cultivation room 201 but is supplied from the carbon dioxide outlet 211 into the air supply duct 206, the supplied carbon dioxide is mixed with recirculating air and then fed into the plant cultivation room 201. Therefore, there will not occur an uneven distribution of carbon dioxide concentration in the plant cultivation room 201.

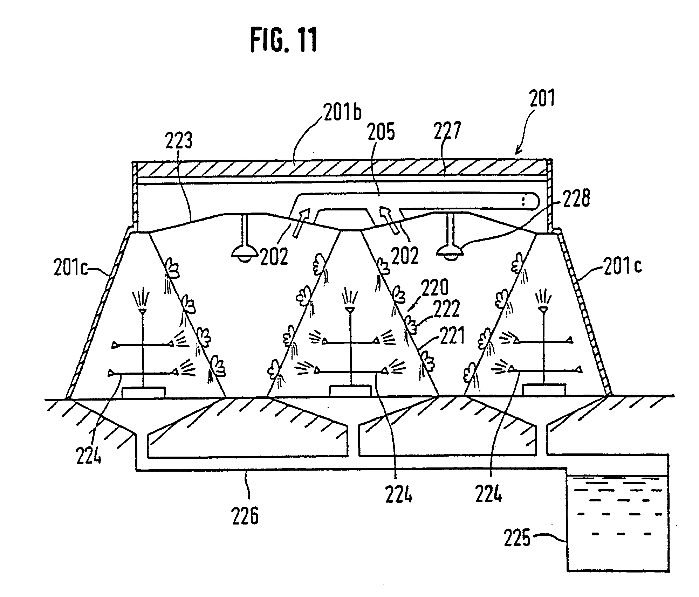

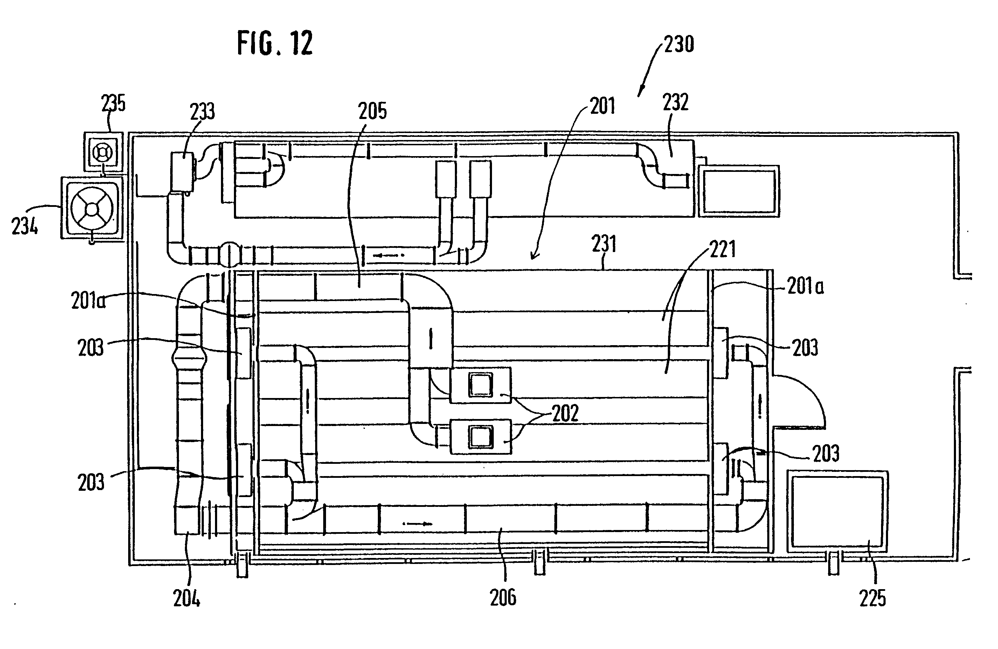

There are provided in the plant cultivation room 201, as shown in Fig.11 and Fig.12 for example, angle panels 220 arranged in a plurality of rows (three rows in the figures), each consisting of two panels 221 with the top edges joined, having a number of holes to support the plants 222 of which the roots are projected inside the panels 221. Both ends of the rows are connected to side walls 201a, and both sides are closed with side walls 201c. Top edges of the adjacent angle panels 220 are connected with canopies 223 having an angular cross-section to prevent diffusion of light to the upper side, forming nearly triangular-sectioned spaces surrounded by the adjacent angle panels 220 and the canopies 223. An exhaust duct 202 as an exhaust means is provided at the center of the canopy 223, and lighting apparatus 228 are disposed under the exhaust duct 202, which are arranged with nearly equal spacings along the longitudinal direction of the angle panels 220. There is provided a hydroponic solution spraying mechanism 224 inside the angle panels 220, as a hydroponic solution feeding mechanism to feed the hydroponic solution or the like to the roots of the plants 222. The hydroponic solution spraying mechanism 224 is connected to a pump (not shown) with a polyvinyl chloride pipe to pump the hydroponic solution stored in a hydroponic solution tank 225 which is disposed underground outside the plant cultivation room. The hydroponic solution spraying mechanism 224 can be as used in the first embodiment described above.

The hydroponic solution sprayed and accumulated on the floor is collected through a collection passage 226. The inner surface of a ceiling 201b of the plant cultivation room 201 is provided with a heat-insulating material 227. The air supply ports 203 are formed at both corners of the plant cultivation room 201.

As shown in Fig.12, there is provided a seedling culture line 232 in the plant cultivation factory 230, in addition to the above-described cultivation lines 231, and the seedling culture line 232 is also air-conditioned by an air-conditioning unit 233. Thus, the seedling culture line 232 can also be controlled for the carbon dioxide concentration as needed, as described above. There are provided cooling towers 234 and 235 for the air-conditioning units 204 and 233 outside the plant cultivation factory 230.

In the above-described plant cultivation room 201, it is sufficient to control the carbon dioxide concentration only when the photosynthesis is actively carried out (when irradiated with the artificial light from the lighting apparatus), thus providing an improved economy.

Although, in this embodiment, the air supply port 209 is disposed in the exhaust duct 205 and the carbon dioxide outlet port 211 is in the air supply duct 206, these ports can also be disposed in reverse.

## Claims

1. A hydroponic culture system comprising
   a roof-shaped panel structure (3, 220) having holes for supporting plants (2, 222) with their roots projecting inside the panel structure, and
   a spraying mechanism (11, 224) for supplying a hydroponic solution to the plant roots from inside the panel structure,
   characterized in that said spraying mechanism includes
   a stand (115) mounted on a base (114) with nozzles (116) provided on the stand for spraying said solution to the plant roots,
   self-propelling means (117-119) for moving said base (114) reciprocally in the longitudinal direction of the panel structure (3, 220), and
   means (125, 126) for detecting the position of said base (114) at both ends of the panel structure (3, 220).

2. The system of claim 1, wherein a plurality of panel structures (3, 220) are disposed in a plant cultivation room (1, 201) equipped with environment control means (202-214).

3. A hydroponic culture system comprising
   a roof-shaped panel structure (3, 220) having holes for supporting plants (2, 222) with their roots projecting inside the panel structure,
   a plant cultivation room (1, 201) housing said panel structure (3, 220),
   a spraying mechanism (224) for supplying a hydroponic solution to the plant roots from inside the panel structure, and

environment control means (202-214) for controlling the environment in the plant cultivation room (1, 201),

characterized in

that said plant cultivation room (1, 201) is formed to keep said plants away from sunlight and includes apparatus (6, 228) for irradiating the plants (2, 222), and

that said environment control means includes

a device (209) for measuring the carbon dioxide concentration in air sampled in an exhaust duct (205) connected to the plant cultivation room (201) for conducting air therefrom to an air conditioning unit (204), or in an air supply duct (206) connected to the same air-conditioning unit (204) as the exhaust duct (205) and connected to the plant cultivation room (201) for conducting thereto air conditioned by the air conditioning unit (204),

a carbon dioxide outlet port (211) communicating with said exhaust duct (205) or supply duct (206),

a carbon dioxide supply passage (213) connecting said outlet port (211) to a carbon dioxide supply source (212) and having an electromagnetic valve (214), and

control means (210) for controlling said valve (214) according to the output signal of said carbon dioxide concentration measuring device (209) so as to adjust the carbon dioxide concentration in said plant cultivation room (201) to a predetermined value.

4. The system of any one of claims 1 to 3, wherein said panel structure (3, 220) consists of two panels (3a, 221) interconnected at their top edges.

5. The system of any one of claims 1 to 4, wherein a plurality of panel structures (3, 220) are disposed parallel to each other.

6. A hydroponic culture system comprising

a plurality of roof-shaped panel structures (3, 220) disposed in rows each having holes supporting plants (2, 222) with their roots projecting inside the panel structure,

a plant cultivation room (1, 201) housing said plurality of panel structures (3, 220), and

a spraying mechanism (11, 224) for supplying a hydroponic solution to the plant roots from inside the panel structure,

characterized in that said plant cultivation room (1, 201) is formed to keep said plants (2, 222) away from sunlight and includes

lighting apparatus (6, 228) for irradiating the plants (2, 222),

canopies (4, 223) connecting top edges of said panel structures (3, 220) of adjacent rows thereby forming spaces of substantially triangular cross-section between adjacent panel structures, and

exhaust ports (7, 202) disposed in the vicinity of said lighting apparatus (6, 228), said lighting apparatus and exhaust ports being disposed on the lower surface of said canopies (4, 223).

7. The system of claim 6, wherein said canopies (4, 223) have an arch-type or angular cross-section.

8. The system of claim 6 or 7, including reflecting surfaces provided on the lower surface of said canopies (4, 223).

9. The system of any of claims 6 to 8, wherein said lighting apparatus (6) has a cover (6b) surrounding a light source (6), said exhaust port (7) being disposed between said light source and said cover.

10. The system of any of claims 6 to 9, including means (202-214) for controlling the environment in said plant cultivation room (1, 201).

11. The system of claim 2 or 10, wherein the environment control means includes

a device (209) for measuring the carbon dioxide concentration in air sampled in an exhaust duct (205) connected to the plant cultivation room (201) for conducting air therefrom to an air conditioning unit (204), or in an air supply duct (206) connected to the same air-conditioning unit (204) as the exhaust duct (205) and connected to the plant cultivation room (201) for conducting thereto air conditioned by the air conditioning unit (204),

a carbon dioxide outlet port (211) communicating with said exhaust duct (205) or supply duct (206),

a carbon dioxide supply passage (213) connecting said outlet port (211) to a carbon dioxide supply

7

source (212) and having an electromagnetic valve (214), and

control means (210) for controlling said valve (214) according to the output signal of said carbon dioxide concentration measuring device (209) so as to adjust the carbon dioxide concentration in said plant cultivation room (201) to a predetermined value.

12. The system of any of claims 6 to 10, wherein said spraying mechanism includes

a stand (115) mounted on a base (114) with nozzles (116) provided on the stand for spraying said solution to the plant roots,

self-propelling means (117-119) for moving said base (114) reciprocally in the longitudinal direction of the panel structure (3, 220), and

means (125, 126) for detecting the position of said base (114) at both ends of the panel structure (3, 220).

13. The system of claim 1 or 12, wherein said self-propelling means (117-119) includes a drive motor (117) disposed underneath a base plate (114) and a sprocket (118) mounted on the shaft of said motor (117) and engaging with a chain (119) disposed along the longitudinal direction of said panel structure (220).

## Revendications

1. Système de culture hydroponique comportant

une structure de panneaux en forme de toit (3, 220) possédant des trous afin de supporter des plantes (2, 222) avec leurs racines faisant saillie à l'intérieur de la structure de panneaux, et

un mécanisme de pulvérisation (11, 224) afin de délivrer une solution hydroponique aux racines des plantes depuis l'intérieur de la structure de panneaux,

caractérisé en ce que ledit mécanisme de pulvérisation comprend

une colonne (115) montée sur une base (114), avec des buses (116) prévues sur la colonne afin de pulvériser ladite solution sur les racines des plantes,

des moyens d'autopropulsion (117-119) afin de déplacer ladite base (114) en va-et-vient dans le sens longitudinal de la structure de panneaux (3, 220), et

des moyens (125, 126) afin de détecter la position de ladite base (114) aux deux extrémités de la structure de panneaux (3, 220).

2. Système selon la revendication 1, dans lequel une pluralité de structures de panneaux (3, 220) sont disposées dans une serre de culture (1, 201) équipée de moyens de commande d'environnement (202-214).

3. Système de culture hydroponique comportant

une structure de panneaux en forme de toit (3, 220) possédant des trous afin de supporter des plantes ( 2, 222) avec leurs racines faisant saillie à l'intérieur de la structure de panneaux,

une serre de culture de plantes (1, 201) recevant ladite structure de panneaux (3, 220),

un mécanisme de pulvérisation (224), afin de délivrer une solution hydroponique aux racines des plantes depuis l'intérieur de la structure de panneaux, et

des moyens de commande d'environnement (202-214) afin de commander l'environnement dans la serre de culture de plantes (1, 201),

caractérisé en ce que

ladite serre de culture de plantes (1, 201) est réalisée pour maintenir lesdites plantes à l'abri de la lumière solaire et comprend un dispositif (6, 228) pour irradier les plantes (2, 222), et

en ce que lesdits moyens de contrôle d'environnement comprennent

un dispositif (209) afin de mesurer la concentration en gaz carbonique de l'air échantillonné dans un conduit d'échappement (205) relié à la serre de culture de plantes (201) pour acheminer l'air de celle-ci vers une unité de conditionnement d'air (204), ou dans un conduit d'alimentation en air (206) relié à cette unité de conditionnement d'air (204) en tant que conduit d'échappement (205) et relié à la serre de culture de plantes (201) pour y introduire l'air conditionné par l'unité de conditionnement d'air (204),

un orifice de sortie (211) de gaz carbonique communiquant avec ledit conduit d'échappement (205) ou le conduit d'alimentation (206),

un passage d'alimentation en gaz carbonique (213) reliant ledit orifice de sortie (211) à une source d'alimentation en gaz carbonique (212) et possédant une électrovanne (214), et

des moyens de commande (210) afin de commander ladite vanne (214) conformément au signal de sortie dudit dispositif de mesure de concentration en gaz carbonique (209) de manière à régler la concentration en gaz carbonique dans ladite serre de culture de plantes (201) à une valeur prédéterminée.

4. Système selon l'une quelconque des revendications 1 à 3, dans lequel ladite structure de panneaux (3, 220) est constituée de deux panneaux (3a, 221) reliés entre eux à leurs bords supérieurs.

5. Système selon l'une quelconque des revendications 1 à 4, dans lequel une pluralité de structures de panneaux (3, 220) sont disposées parallèlement entre elles.

6. Système de culture hydroponique comportant

une pluralité de structures de panneaux en forme de toit (3, 220) disposées en rangées, possédant chacune des trous supportant des plantes (2, 222) avec leurs racines faisant saillie à l'intérieur de la structure de panneaux,

une serre de culture de plantes (1, 201) recevant ladite pluralité de structures de panneaux (3, 220), et

un mécanisme de pulvérisation (11, 224) afin de délivrer une solution hydroponique aux racines des plantes depuis l'intérieur de la structure de panneaux,

caractérisé en ce que ladite serre de culture de plantes (1, 201) est réalisée pour maintenir lesdites plantes (2, 222) à l'abri de la lumière solaire et comprend

un dispositif d'éclairage (6, 228) pour irradier les plantes (2, 222),

des voûtes (4, 223) reliant les bords supérieurs desdites structures de panneaux (3, 220) de rangées adjacentes, formant ainsi des chambres sensiblement triangulaires en coupe entre des structures de panneaux adjacentes et

des orifices d'échappement (7, 202) ménagés à proximité dudit dispositif d'éclairage (6, 228), ledit dispositif d'éclairage et lesdits orifices d'échappement étant disposés sur la surface inférieure desdites voûtes (4, 223).

7. Système selon la revendication 6, dans lequel lesdites voûtes (4, 223) possèdent une coupe en forme d'arche ou angulaire.

8. Système selon la revendication 6 ou 7, comprenant des surfaces réfléchissantes disposées sur la surface inférieure desdites voûtes (4, 223).

9. Système selon l'une quelconque des revendications 6 à 8, dans lequel ledit dispositif d'éclairage (6) possède un couvercle (6b) entourant une source lumineuse (6a), ledit orifice d'échappement (5) étant disposé entre ladite source lumineuse et ledit couvercle.

10. Système selon l'une quelconque des revendications 6 à 9, comprenant des moyens (202-214) afin de commander l'environnement dans ladite serre de culture de plantes (1, 201).

11. Système selon la revendication 2 ou 10, dans lequel les moyens de commande d'environnement comprennent

un dispositif (209) afin de mesurer la concentration en gaz carbonique dans l'air échantillonné dans un conduit d'échappement (205) relié à la serre de culture de plantes (201) pour acheminer de l'air depuis celle-ci vers une unité de conditionnement d'air (204) ou dans un conduit d'alimentation en air (206) relié à cette unité de conditionnement d'air (204) en tant que conduit d'échappement (205) et relié à la serre de culture de plantes (201) pour y acheminer de l'air conditionné par l'unité de conditionnement d'air (204),

un orifice de sortie de gaz carbonique (211) communiquant avec ledit conduit d'échappement (205) ou le conduit d'alimentation (206),

un passage d'alimentation en gaz carbonique (213) reliant ledit orifice de sortie (211) à une source d'alimentation en gaz carbonique (212) et possédant une électrovanne (214), et

des moyens de commande (210) afin de commander ladite vanne (214) conformément au signal de sortie dudit dispositif de mesure de concentration en gaz carbonique (209) de manière à régler la concentration en gaz carbonique dans ladite serre de culture de plantes (201) à une valeur prédéterminée.

**12.** Système selon l'une quelconque des revendications 6 à 10, dans lequel ledit mécanisme de pulvérisation comprend

une colonne (115) montée sur une base (114) avec des buses (116) prévues sur la colonne afin de pulvériser ladite solution sur les racines des plantes,

des moyens d'autopropulsion (117-119) afin de déplacer ladite base (114) en va-et-vient dans la direction longitudinale de la structure de panneaux (3, 220), et

des moyens (125, 126) afin de détecter la position de ladite base (114) aux deux extrémités de la structure de panneaux (3, 220).

**13.** Système selon la revendication 1 ou 12, dans lequel lesdits moyens d'autopropulsion (117-119) comprennent un moteur d'entraînement (117) disposé au-dessous d'une plaque d'assise (114) et un pignon (118) monté sur l'arbre dudit moteur (117) et coopérant avec une chaîne (119) disposée selon la direction longitudinale de ladite structure de panneaux (220).

**Patentansprüche**

**1.** Hydroponisches Aufzuchtsystem, umfassend

eine dachförmige Plattenstruktur (3, 220) mit Löchern zur Aufnahme von mit ihren Wurzeln in die Plattenstruktur hineinragenden Pflanzen (2, 222), und

einem Sprühmechanismus (11, 224) zur Zuführung einer hydroponischen Lösung an die Pflanzenwurzeln von der Innenseite der Plattenstruktur her,

dadurch gekennzeichnet, daß der Sprühmechanismus umfaßt:

einen an einem Untergestell (114) montierten Ständer (115) mit daran vorgesehenen Düsen (116) zum Besprühen der Pflanzenwurzeln mit der Lösung,

eine selbstfahrende Einrichtung (117-119) zum Hin- und Herbewegen des Untergestells (114) in Längsrichtung der Plattenstruktur (3, 220), und

eine Einrichtung (125, 126) zum Erfassen der Position des Untergestells (114) an beiden Enden der Plattenstruktur (3, 220).

**2.** System nach Anspruch 1, wobei mehrere Plattenstrukturen (3, 220) in einem mit einer Klimatisierungseinrichtung (202-214) ausgerüsteten Pflanzenaufzuchtraum (1, 201) angeordnet sind.

**3.** Hydroponisches Aufzuchtsystem, umfassend

eine dachförmige Plattenstruktur (3, 220) mit Löchern zur Aufnahme von mit ihren Wurzeln in die Plattenstruktur hineinragenden Pflanzen (2, 222),

einen Pflanzenaufzuchtraum (1, 201), in dem die Plattenstruktur (3, 220) untergebracht ist,

einen Sprühmechanismus (224) zur Zuführung einer hydroponischen Lösung an die Pflanzenwurzeln von der Innenseite der Plattenstruktur her, und

eine Klimatisierungseinrichtung (202-214) zur Klimatisierung des Pflanzenaufzuchtraums (1, 201),

dadurch gekennzeichnet,

daß der Pflanzenaufzuchtraum (1, 201) so ausgebildet ist, daß er Sonnenlicht von den Pflanzen abhält, und ein Gerät (6, 228) zum Beregnen der Pflanzen (2, 222) enthält, und

daß die Klimatisierungseinrichtung umfaßt:

ein Gerät (209) zum Messen der Kohlendioxidkonzentration der Luft, von der Proben in einer Abluftleitung (205), die an den Pflanzenaufzuchtraum (201) zum Leiten von Luft aus diesem zu einer Luftkonditioniereinheit (204) angeschlossen ist, oder in einer Zuluftleitung (206) entnommen werden, die mit derselben Luftkonditioniereinheit (204) als Abluftleitung (205) verbunden und an den Pflanzenaufzuchtraum (201) zum Zuführen von durch die Luftkonditioniereinheit (204) aufbereiteter Luft angeschlossen ist,

eine mit der Abluftleitung (205) oder der Zuluftleitung (206) in Verbindung stehende Kohlendioxid-Auslaßöffnung (211),

eine die Auslaßöffnung (211) mit einer Kohlendioxidversorgung (212) verbindende Kohlendioxid-Zuführleitung (213) mit einem Elektromagnetventil (214), und

eine Steuereinrichtung (210) zur Steuerung des Ventils (214) gemäß dem Ausgangssignal des Kohlendioxidkonzentrations-Messgerätes (209) zur Einstellung der Kohlendioxidkonzentration in dem Pflanzenaufzuchtraum (201) auf einen vorgegebenen Wert.

**4.** System nach einem der Ansprüche 1 bis 3, wobei die Plattenstruktur (3, 220) aus zwei an ihren

EP 0 247 527 B1

Oberkanten miteinander verbundenen Platten (3a, 221) besteht.

5. System nach einem der Ansprüche 1 bis 4, wobei mehrere Plattenstrukturen (3, 220) parallel zueinander angeordnet sind.

6. Hydroponisches Aufzuchtsystem, umfassend
mehrere in Reihen angeordnete dachförmige Plattenstrukturen (3, 220), deren jede Löcher zur Aufnahme von mit ihren Wurzeln in die Plattenstruktur hineinragenden Pflanzen (2, 222) aufweist,
einen Pflanzenaufzuchtraum (1, 201), in dem die mehreren Plattenstrukturen (3, 220) untergebracht sind, und
einen Sprühmechanismus (11, 224) zur Zuführung einer hydroponischen Lösung an die Pflanzenwurzeln von der Innenseite der Plattenstruktur her,
dadurch gekennzeichnet, daß der Pflanzenaufzuchtraum (1, 201) so ausgebildet ist, daß er Sonnenlicht von den Pflanzen (2, 222) abhält, und umfaßt:
eine Beleuchtungseinrichtung (6, 228) zum Bestrahlen der Pflanzen (2, 222),
Baldachine (4, 223), die die Oberkanten der Plattenstrukturen (3, 220) benachbarter Reihen verbinden und dadurch zwischen benachbarten Plattenstrukturen Räume mit im wesentlichen dreieckigen Querschnitt bilden, und
in der Umgebung der Beleuchtungseinrichtung (6, 228) angeordneter Abluftöffnungen (7, 202), wobei die Beleuchtungseinrichtung und die Abluftöffnungen an der unteren Fläche der Baldachine (4, 223) angeordnet sind.

7. System nach Anspruch 6, wobei die Baldachine (4, 223) einen bogenförmigen oder eckigen Querschnitt aufweisen.

8. System nach Anspruch 6 oder 7, wobei an der unteren Fläche der Baldachine (4, 223) reflektierende Flächen angeordnet sind.

9. System nach einem der Ansprüche 6 bis 8, wobei die Beleuchtungseinrichtung (6) eine eine Lichtquelle (6) umgebende Abdeckung (6b) aufweist und die Abluftöffnung (7) zwischen der Lichtquelle und der Abdeckung angeordnet ist.

10. System nach einem der Ansprüche 6 bis 9, mit einer Einrichtung (202-214) zur Klimasteuerung in dem Pflanzenaufzuchtraum (1, 201).

11. System nach Anspruch 2 oder 10, wobei die Klimasteuereinrichtung umfaßt:
ein Gerät (209) zum Messen der Kohlendioxidkonzentration der Luft, von der Proben in einer Abluftleitung (205), die an den Pflanzenaufzuchtraum (201) zum Leiten von Luft aus diesem zu einer Luftkonditioniereinheit (204) angeschlossen ist, oder in einer Zuluftleitung (206) entnommen werden, die mit derselben Luftkonditioniereinheit (204) als Abluftleitung (205) verbunden und an den Pflanzenaufzuchtraum (201) zum Zuführen von durch die Luftkonditioniereinheit (204) aufbereiteter Luft angeschlossen ist,
eine mit der Abluftleitung (205) oder der Zuluftleitung (206) in Verbindung stehende Kohlendioxid-Auslaßöffnung (211),
eine die Auslaßöffnung (211) mit einer Kohlendioxidversorgung (212) verbindende Kohlendioxid-Zuführleitung (213) mit einem Elektromagnetventil (214), und
eine Steuereinrichtung (210) zur Steuerung des Ventils (214) gemäß dem Ausgangssignal des Kohlendioxidkonzentrations-Messgerätes (209) zur Einstellung der Kohlendioxidkonzentration in dem Pflanzenaufzuchtraum (201) auf einen vorgegebenen Wert.

12. System nach einem der Ansprüche 6 bis 10, wobei der Srühmechanismus umfaßt:
einen an einem Untergestell (114) montierten Ständer (115) mit daran vorgesehenen Düsen (116) zum Besprühen der Pflanzenwurzeln mit der Lösung,
eine selbstfahrende Einrichtung (117-119) zum Hin- und Herbewegen des Untergestells (114) in Längsrichtung der Plattenstruktur (3, 220), und
eine Einrichtung (125, 126) zum Erfassen der Position des Untergestells (114) an beiden Enden der Plattenstruktur (3, 220).

11

**13.** System nach Anspruch 1 oder 2, wobei die selbstfahrende Einrichtung (117-119) einen unter einer Grundplatte (114) angeordneten Antriebsmotor (117) sowie ein auf der Welle des Motors (117) angeordnetes Kettenrad (118) umfaßt, das mit einer in Längsrichtung der Plattenstruktur (220) verlaufenden Kette (119) in Eingriff steht.

FIG. 1

EP 0 247 527 B1

FIG. 2

FIG. 3

# FIG. 4

# FIG. 5

FIG. 6

FIG. 7

FIG.3　　　FIG.4　　　FIG.5

FIG.7　　　FIG.6　　　FIG.8

FIG. 10

# FIG. 11

FIG. 12

EP 0 247 527 B1

FIG. 13

FIG. 14

# FIG. 15

# FIG. 16